Europäisches Patentamt

European Patent Office

Office européen des brevets

(19)

(11) Numéro de publication: **0 165 191**
**B1**

(12) # FASCICULE DE BREVET EUROPEEN

(45) Date de publication du fascicule du brevet:
26.07.89

(51) Int. Cl.⁴: **A 01 D 78/10, A 01 B 33/08**

(21) Numéro de dépôt: **85440030.6**

(22) Date de dépôt: **21.05.85**

(54) **Machine agricole munie de moyens d'entraînement perfectionnés.**

(30) Priorité: **25.05.84 FR 8408366**

(43) Date de publication de la demande:
**18.12.85 Bulletin 85/51**

(45) Mention de la délivrance du brevet:
**26.07.89 Bulletin 89/30**

(84) Etats contractants désignés:
**AT DE GB IT NL**

(56) Documents cités:
**DE-A- 1 482 213**
**DE-A- 1 655 950**
**DE-A- 3 119 526**
**FR-A- 1 225 342**
**FR-A- 1 565 214**
**FR-A- 2 312 184**

(73) Titulaire: **KUHN S.A., 4, Impasse des Fabriques,**
**F-67700 Saverne (FR)**

(72) Inventeur: **Quirin, Michel, 29, rue de la Bergerie**
**Allenwiller, F-67310 Wasselonne (FR)**

(74) Mandataire: **Andres, Jean-Claude, KUHN S.A. 4, Impasse**
**des Fabriques, F-67700 Saverne (FR)**

ACTORUM AG

## Description

La présente invention se rapporte aux machines agricoles comportant notamment un châssis portant des outils de travail entraînés en rotation durant le travail à partir d'un dispositif d'entraînement tel qu'un arbre de prise de force d'un tracteur par l'intermédiaire d'un arbre d'entraînement et de moyens de transmission, ces moyens de transmission étant intégrés aux machines et se composant de deux arbres de transmission parallèles munis chacun d'une roue dentée qui engrène avec la roue dentée de l'autre arbre parallèle, l'un de ces arbres de transmission communiquant avec un pignon d'entraînement desdits outils et une extrémité d'un de ces arbres de transmission pouvant être reliée à l'arbre d'entraînement.

Ces outils de travail sont généralement prévus pour tourner dans un sens défini en fonction de la nature du travail auquel est destinée la machine. Ainsi, dans le cas des andaineurs de fourrage, il est nécessaire de faire tourner chaque rotor dans le sens des aiguilles d'une montre si la machine est prévue pour déposer l'andain sur son côté droit par rapport à la direction d'avancement, ou bien dans le sens contraire si elle est prévue pour déposer l'andain sur le côté gauche.

D'autre part, vu que sur les tracteurs d'entraînement, les sens de rotation des arbres de prise de force frontaux sont différents d'un modèle à l'autre, il est nécessaire de prévoir des moyens permettant, selon le cas, une inversion desdits sens de rotation afin de pouvoir animer correctement les machines accouplées à ces tracteurs.

De plus, dans le cas de machines animées à partir des arbres de prise de force situés sur le côté arrière des tracteurs, il est souvent avantageux de pouvoir entraîner les outils dans le sens contraire de celui qui est donné normalement par lesdits arbres de prise de force.

Pour ces différentes raisons, il est très important de prévoir des moyens permettant à chaque utilisateur de régler le sens de rotation des outils de sa machine en fonction de son tracteur et du travail souhaité.

A cet effet, une machine pour le travail du sol connue dans la demande de brevet FR-A 2 312 184 comporte un crabot d'inversion. Celui-ci est déplaçable entre deux pignons coniques qui sont prévus sur un des arbres de transmission et qui engrènent avec le pignon d'entraînement des outils de travail. Ledit crabot peut être mis en prise avec l'un ou l'autre desdits pignons coniques de manière à faire tourner les outils de travail, par l'intermédiaire de leur pignon d'entraînement, dans le sens voulu.

Ce dispositif d'inversion est très coûteux, ce qui fait que son emploi ne se justifie que dans les cas où l'inversion du sens de rotation des outils de travail doit être effectuée fréquemment.

La présente invention a pour but de proposer des moyens d'inversion du sens de rotation des outils de travail qui sont plus simples, moins chers et moins encombrants que les moyens connus.

A cet effet, une importante caractéristique de l'invention consiste en ce que les moyens de transmission composés par les arbres de transmission et leurs roues dentées forment une unité susceptible d'être extraite de la machine, d'être tournée de 180° autour d'un axe parallèle aux arbres de transmission et réintroduite dans la machine, que chacun de ces arbres de transmission présente une extrémité pouvant être liée avec le pignon d'entraînement, tandis qu'un seul de ces arbres de transmission a son autre extrémité conçue pour pouvoir être reliée à l'arbre d'entraînement.

Pour modifier le sens de rotation des outils de travail sur la machine selon l'invention, il suffit de tourner cette unité réversible de 180° autour d'un axe central, parallèle aux arbres de transmission.

Le réglage du sens de rotation des outils de travail est ainsi obtenu par la liaison du premier ou du second arbre de transmission avec le pignon d'entraînement de la machine.

Selon le cas, l'entraînement se fait alors directement à travers un seul des arbres de transmission ou bien en passant d'abord d'un arbre à l'autre au moyen de leurs roues dentées. Dans le premier cas, le pignon d'entraînement de la machine est entraîné dans le même sens que l'arbre de prise de force du tracteur, tandis que dans le second cas, ledit pignon est entraîné dans le sens contraire. Ainsi, en modifiant le sens de rotation de ce pignon d'entraînement, l'utilisateur peut régler le sens de rotation des outils de travail de sa machine.

L'ensemble réversible selon l'invention est très simple à réaliser, ce qui permet d'abaisser son prix de revient. De plus, l'inversion du sens de rotation des outils de travail est obtenue d'une manière très simple.

Selon une autre caractéristique de l'invention, les deux arbres de transmission précités sont montés sur une plaque qui forme avantageusement le couvercle d'un carter d'entraînement des outils de travail.

Ce mode de montage permet de réduire l'encombrement du dispositif et facilite les manœuvres en vue du réglage du sens de rotation des outils de travail.

D'autres caractéristiques et avantages de l'invention ressortiront de la description ci-après, avec référence aux dessins annexés qui représentent, à titre d'exemple non limitatif, une forme de réalisation de l'invention.

Dans ces dessins:

- La figure 1 représente une vue d'ensemble d'une machine selon l'invention,
- La figure 2 représente à plus grande échelle une vue de face du dispositif d'inversion,
- La figure 3 représente une coupe suivant le plan III-III de la figure 2.

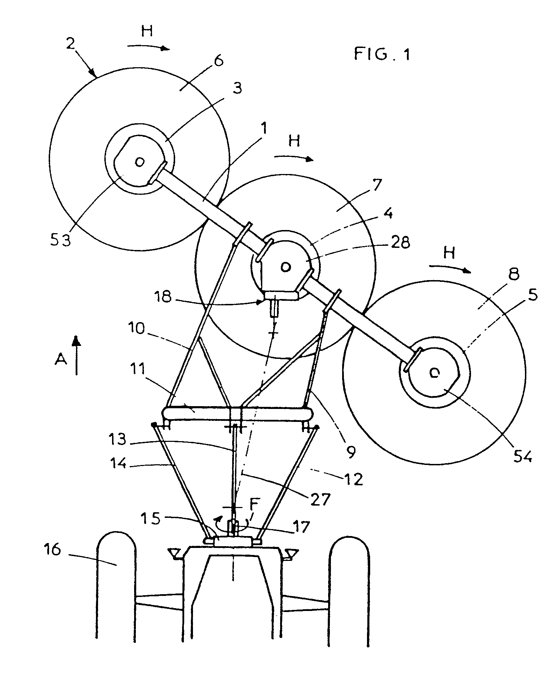

La machine selon l'invention qui est représentée sur la figure 1 est un andaineur de fourrage.

Elle comporte un châssis (1) portant des outils de travail (2). Ceux-ci sont constitués par trois tambour (3, 4 et 5) portant chacun à sa partie inférieure une jupe souple (6, 7 et 8) en vue de ramasser et déplacer du fourrage étalé sur le sol.

Audit châssis (1) est relié à l'aide de longerons (9 et 10) un cadre coudé (11) muni de trois points d'accouplement. A chacun de ces points d'accouplement est reliée l'extrémité d'une barre d'attelage (12, 13 et 14) dont l'autre extrémité est accouplée à un dispositif de relevage frontal (15) d'un tracteur d'entraînement (16) représenté partiellement. Ledit dispositif permet de soulever ou d'abaisser la machine et de la déplacer dans le sens d'avancement indiqué par la flèche (A).

Durant le travail, lesdits tambours (3, 4 et 5) sont entraînés en rotation à partir d'un arbre de prise de force (17) du tracteur (16). Conformément à une importante caractéristique de l'invention, cette machine est munie de moyens d'entraînement constituant un ensemble réversible (18) intégré à la machine et permettant de définir le sens de rotation des tambours (3, 4 et 5). Dans le cas de cet andaineur, il faut faire tourner lesdits tambours dans le sens de flèches (H) afin d'obtenir un déplacement latéral du fourrage et la formation d'un andain sur le côté de la machine qui est le plus rapproché du tracteur.

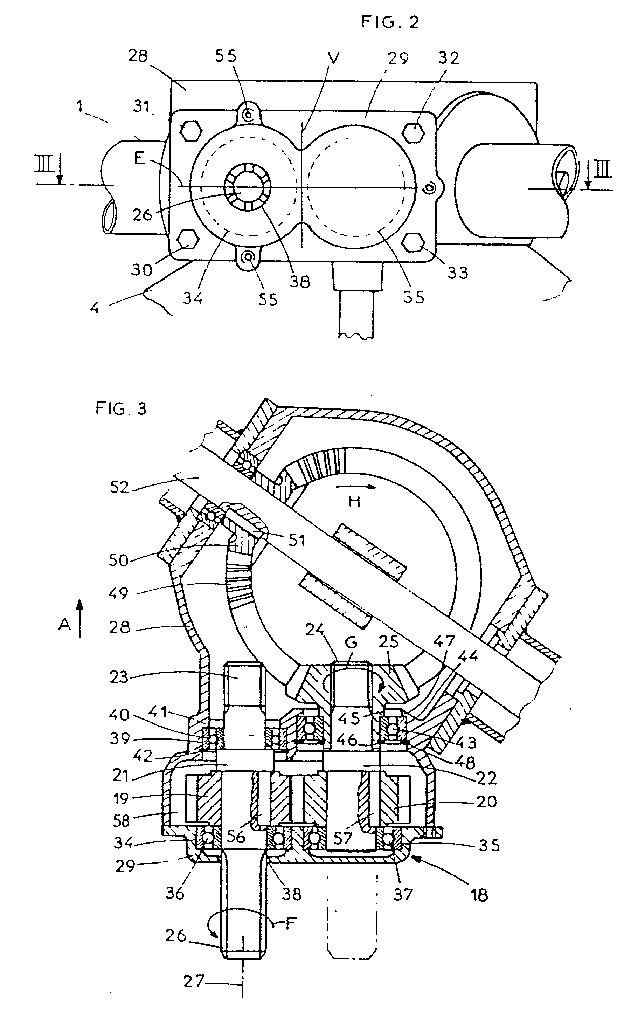

Tel que cela ressort des figures 2 et 3, l'ensemble (18) se compose notamment de deux roues dentées (19 et 20) qui sont sensiblement identiques et qui engrènent l'une avec l'autre. Chacune de ces roues dentées (19, 20) est rendue solidaire d'un arbre de transmission (21 et 22) au moyen de clavettes (56 et 57). Ces arbres de transmission (21 et 22) et les roues dentées (19 et 20) forment une unité susceptible d'être extraite de la machine, tournée de 180° autour d'un axe parallèle aux arbres de transmission et réintroduite dans la machine. Chacun de ces arbres de transmission présente une extrémité (23 et 24) pouvant être liée avec un pignon d'entraînement (25) monté sur la machine. A cet effet, ces extrémités (23 et 24) sont pourvues de cannelures qui peuvent être amenées en prise avec des cannelures prévues dans ce pignon (25). Entre lesdites extrémités cannelées et le pignon d'entraînement (25) est prévu un ajustement glissant. La seconde extrémité (26) de l'arbre de transmission (21) est cannelée en vue de pouvoir être reliée à un arbre d'entraînement (27) (représenté schématiquement sur la figure 1) qui assure la jonction avec l'arbre de prise de force (17) du tracteur (16).

L'ensemble (18) se situe dans une chambre (58) d'un carter de renvoi (28) surmontant le tambour central (4). Les arbres de transmission (21 et 22) sont montés sur une plaque (29) formant le couvercle de ladite chambre (58) du carter (28). Sa fixation est réalisée au moyen de quatre vis (30 à 33). Cette plaque (29) présente deux paliers (34 et 35) dans lesquels sont disposés des roulements à billes (36 et 37) servant au guidage des arbres de transmission (21 et 22).

Les centres de ces deux paliers (34 et 35) se situent sur une même ligne horizontale (E) se situant à mi-distance entre les vis de fixation (30, 33) et (31, 32) et, à égale distance d'une ligne verticale (V) se situant à mi-distance entre les vis de fixation (30, 31) et (32, 33).

La plaque (29) possède par ailleurs un orifice (38) pour le passage de l'extrémité cannelée (26) de l'arbre de transmission (21).

Sur le côté intérieur de la chambre (58) le carter de renvoi (28) comporte un palier (39). Dans ce palier est logé un roulement à billes (40) pour le guidage, selon le cas, de l'extrémité (23) de l'arbre de transmission (21) ou bien de l'extrémité (24) de l'arbre (22). Entre ces extrémités (23 et 24) et le roulement à billes (40) est prévu un ajustement glissant. Le positionnement du roulement est assuré au moyen d'un épaulement (41) servant de butée et d'un circlips (42).

Le pignon d'entraînement (25) est guidé dans un roulement à billes (43) logé dans un second palier (44) du côté intérieur de la chambre (58). Son positionnement par rapport à ce roulement à billes (43) est assuré au moyen d'un épaulement (45) et d'un circlips (46). Le roulement à billes (43) est également positionné au moyen d'un épaulement (47) prévu dans le palier (44) et d'un circlips (48).

Comme cela est visible sur la figure 3, le pignon d'entraînement (25) engrène avec une couronne dentée (49) se situant dans le carter (28). Cette couronne (49) est solidaire du tambour (4) et entraîne ce dernier en rotation durant le travail. Ladite couronne engrène par ailleurs avec un pignon (50) qui est relié au moyen d'une clavette (51) à un arbre (52) s'étendant dans le châssis (1). Cet arbre (52) comporte au niveau des autres tambours (3 et 5) des pignons qui engrènent avec des couronnes solidaires desdits tambours, en vue de l'entraînement de ces derniers durant le travail. Ces pignons et couronnes sont de même nature que le pignon (50) et la couronne (49) et sont logés dans des carters de renvoi (53 et 54) surmontant les tambours (3 et 5).

Pour régler le sens de rotation des tambours (3 et 5) de manière à ce qu'ils tournent dans le sens des flèches (H), il faut tenir compte du sens de rotation de l'arbre de prise de force (17) du tracteur (16). En admettant que celui-ci tourne dans le sens indiqué par la flèche (F) sur la figure 1, c'est-à-dire dans le sens de déplacement des aiguilles d'une montre pour un observateur placé à l'avant du tracteur, l'arbre d'entraînement (27) entraîne l'arbre de transmission (21) dans le même sens (F).

Dans l'exemple de montage représenté en traits forts sur la figure 3, cet arbre de transmission (21) entraîne le second arbre (22) par l'intermédiaire des roues dentées (19 et 20). Celui-ci tourne dans le sens contraire qui est indiqué par la flèche (G). Ledit arbre de transmission (22) entraîne alors le tambour (4) dans le sens de la flèche (H) par l'intermédiaire du pignon (25) et de la couronne (49). Les deux autres tambours (3 et 5) sont également entraînés dans le même sens (H) par l'intermédiaire du pignon (50), de l'arbre (52) et des pignons et couronnes dentées disposés dans les carters de renvoi (53 et 54).

Dans le cas où l'arbre de prise de force (17) du tracteur d'entraînement tourne dans le sens opposé à celui indiqué par la flèche (F) sur la figure 1, il y a lieu de procéder comme décrit ci-après en vue de conserver le même sens de rotation (H) aux tambours (3 à 5).

Il faut dévisser la plaque (29) et retirer l'ensemble (18) du carter (28). Pour cela elle possède avantageusement trois trous filetés (55) dans lesquels on peut engager des vis. Dès que celles-ci butent contre la paroi du carter (28), elles s'appuient contre celle-ci et éloignent la plaque (29) dudit carter. Cet éloignement provoque le retrait des extrémités (23 et 24) des arbres de transmission (21 et 22), respectivement du roulement à billes (40) et du pignon d'entraînement (25). Une fois ce retrait opéré, on tourne la plaque (29) avec les arbres de transmission (21 et 22) de 180° afin d'amener l'arbre (21) en prise directe avec le pignon d'entraînement (25). Dans cette nouvelle position, la plaque (29) se fixe à nouveau sur le carter (28) au moyen des vis (30 à 33). L'arbre de transmission (21) occupe alors la position représentée en traits mixtes sur la figure 3, tandis que le second arbre (21) est simplement guidé dans le roulement (40).

Dans cette position, l'arbre de transmission (21) entraîne directement le pignon d'entraînement (25) dans le sens indiqué par la flèche (G) sur la figure 3. En conséquence, celui-ci entraîne également les tambours (3 à 5) dans le sens des flèches (H) en vue d'un andainage latéral.

Le dispositif selon l'invention permet non seulement de conserver le même sens de rotation aux outils de travail d'une machine à partir d'arbres de prise de force tournant dans des sens opposés, mais permet aussi d'inverser le sens de rotation desdits outils de travail lorsqu'ils sont entraînés à partir d'arbres de prise de force tournant dans le même sens, si l'on souhaite modifier la nature du travail obtenu.

Il peut aussi équiper d'autres machines que celle décrite ci-dessus.

**Revendications**

1. Machine agricole comportant notamment un châssis (1) portant des outils (2) entraînés en rotation durant le travail à partir d'un dispositif d'entraînement tel qu'un arbre de prise de force (17) d'un tracteur d'entraînement (16) par l'intermédiaire d'un arbre d'entraînement (27) et de moyens de transmission, ces moyens de transmission étant intégrés à la machine et se composant de deux arbres de transmission (21 et 22) parallèles, munis chacun d'une roue dentée (19 et 20) qui engrène avec la roue dentée de l'autre arbre parallèle, l'un de ces arbres de transmission (21, 22) communiquant avec un pignon d'entraînement (25) desdits outils (2) et une extrémité d'un de ces arbres de transmission (21, 22) pouvant être reliée à l'arbre d'entraînement (27), caractérisée par le fait que les arbres de transmission (21 et 22) et les roues dentées (19 et 20) forment une unité susceptible d'être extraite de la machine, d'être tournée de 180° autour d'un axe parallèle aux arbres de transmission, et réintroduite dans la machine que chacun de ces arbres de transmission présente une extrémité (23, 24) pouvant être liée avec le pignon d'entraînement (25) tandis qu'un seul de ces arbres de transmission a son autre extrémité (26) conçue pour pouvoir être reliée à l'arbre d'entraînement (27).

2. Machine selon la revendication 1, caractérisée par le fait que les deux roues dentées (19 et 20) sont sensiblement identiques.

3. Machine selon la revendication 1, caractérisée par le fait que les deux arbres de transmission (21 et 22) sont montés sur une plaque (29) formant un couvercle.

4. Machine selon la revendication 3, caractérisée par le fait que la plaque (29) présente un orifice (38) pour le passage de l'extrémité (26) de l'arbre de transmission (21).

5. Machine selon la revendication 3 ou 4, caractérisée par le fait que la plaque (29) présente deux paliers (34 et 35) servant de siège à des roulements à billes (36 et 37) destinés au guidage des arbres (21 et 22).

6. Machine selon la revendication 5, caractérisée par le fait que les centres des paliers (34 et 35) se situent sur une même ligne horizontale (E) se situant à mi-distance entre les vis de fixation (30, 33) et (31, 32) et, à égale distance d'une ligne verticale (V) se situant à mi-distance entre les vis de fixation (30, 31) et (32, 33).

7. Machine selon la revendication 1, caractérisée par le fait qu'entre les extrémités (23 et 24), des arbres de transmission (21 et 22) et le pignon d'entraînement (25) est prévu un ajustement glissant.

8. Machine selon l'une quelconque des revendications précédentes, caractérisée par le fait qu'elle comporte, d'une manière connue en soi, un palier (39) présentant un roulement à billes (40) pour le guidage de l'extrémité (23 ou 24) de l'arbre de transmission (21 ou 22) et qu'entre les extrémités (23 et 24) des arbres de transmission (21 et 22) et le roulement à billes (40) est prévu un ajustement glissant.

**Patentansprüche**

1. Landmaschine mit insbesondere einem Tragrahmen (1) mit Werkzeugen (2), die während der Arbeit in Rotation angetrieben sind von einer Antriebsvorrichtung aus, so wie eine Zapfwelle (17) eines Antriebsschleppers (16), mittels einer Antriebswelle (27) und Übertragungsmitteln, welche Übertragungsmittel in die Maschine integriert sind und aus zwei parallelen Übertragungswellen (21 und 22) bestehen, wovon jede ein Zahnrad (19 und 20) besitzt, das mit dem Zahnrad der anderen parallelen Welle im Eingriff steht, wobei eine dieser Übertragungswellen (21, 22) mit einem Antriebsritzel (25) der Werkzeuge (2) in Verbindung steht und wobei ein Ende einer dieser Übertragungswellen (21, 22) mit der Antriebswelle (27) verbunden werden kann, dadurch gekennzeichnet, dass die Übertragungswellen (21 und 22) und die Zahnräder (19 und 20) eine Einheit bilden, die aus der Maschine herausnehmbar, um 180° um eine zu den Übertragungswellen parallelen Achse drehbar und wieder in die Maschine einsetzbar ist, dass jede von diesen Übertragungswellen ein Ende (23, 24) aufweist, das mit dem Antriebsritzel (25) verbunden werden kann, während nur eine von diesen Übertragungswellen ihr anderes Ende (26) so gestaltet hat, dass es mit der Antriebswelle (27) verbunden werden kann.

2. Maschine nach Anspruch 1, dadurch gekennzeichnet, dass die zwei Zahnräder (19 und 20) nahezu identisch sind.

3. Maschine nach Anspruch 1, dadurch gekennzeichnet, dass die zwei Übertragungswellen (21 und 22) auf eine Platte (29) montiert sind, die einen Deckel bildet.

4. Maschine nach Anspruch 3, dadurch gekennzeichnet, dass die Platte (29) eine Öffnung (38) aufweist für den Durchgang des Endes (26) der Übertragungswellen (21).

5. Maschine nach Anspruch 3 oder 4, dadurch gekennzeichnet, dass die Platte (29) zwei Lager (34 und 35) aufweist, die den Sitz für Kugellager (36 und 37) bilden, die zur Führung der Wellen (21 und 22) bestimmt sind.

6. Maschine nach Anspruch 5, dadurch gekennzeichnet, dass die Mitten der Lager (34 und 35) sich auf einer gleichen Horizontalen (E) befinden, die sich im Mittelbereich zwischen den Befestigungsschrauben (30, 33) und (31, 32) erstreckt und sich in gleicher Entfernung von einer Vertikalen (V) befinden, die sich im Mittelbereich zwischen den Befestigungsschrauben (30, 31) und (32, 33) erstreckt.

7. Maschine nach Anspruch 1, dadurch gekennzeichnet, dass zwischen den Enden (23 und 24) der Übertragungswellen (21 und 22) und dem Antriebsritzel (25) ein Gleitsitz vorgesehen ist.

8. Maschine nach irgendeinem der vorhergehenden Ansprüche, dadurch gekennzeichnet, dass sie, in an sich bekannter Weise, ein Lager (39) besitzt, das ein Kugellager (40) für die Führung des Endes (23 oder 24) der Übertragungswelle (21 oder 22) aufweist, und dass zwischen den Enden (23 und 24) der Übertragungswellen (21 und 22) und dem Kugellager (40) ein Gleitsitz vorgesehen ist.

**Claims**

1. Agricultural implement with especially one frame (1) equipped with tools (2) driven in rotation during work by a driving device such as the power take-off shaft (17) of a driving tractor (16) by means of a drive shaft (27) and of transmission means, said transmission means being integrated to the machine and made up of two parallel transmission shafts (21 and 22), each equipped with a gear wheel (19 and 20) which intermeshes with the gear wheel of the other parallel shaft, one of these transmission shafts (21, 22) being related to a drive pinion (25) of said tools (2) and one end of said transmission shafts (21, 22) which can be connected to the drive shaft (27), characterized by the fact that the transmission shafts (21 and 22) and the gear wheels (19 and 20) make up a unit which can be removed from the machine, turned 180° around an axis parallel to the transmission shafts and reinserted into the machine, that each of these transmission shafts has an end (23, 24) which can be connected to the drive pinion (25), whereas only one of these transmission shafts has its other end (26) designed to be connected to the drive shaft (27).

2. Agricultural implement according to Claim 1, characterized by the fact that the two gear wheels (19 and 20) are nearly identical.

3. Agricultural implement according to Claim 1, characterized by the fact that the two transmission shafts (21 and 22) are mounted on a plate (29) forming a cover.

4. Agricultural implement according to Claim 3, characterized by the fact that the plate (29) has an opening (38) where the end (26) of the transmission shaft passes through.

5. Agricultural implement according to Claim 3 or 4, characterized by the fact that the plate (29) has two bearings (34 and 35) housing ball bearings (36 and 37) for guiding the shafts (21 and 22).

6. Agricultural implement according to Claim 5, characterized by the fact that the centers of the bearings (34 and 35) are situated on the same horizontal line (E) situated halfway between the fixing screws (30, 33) and (31, 32) and at equal distance to a vertical line (V) situated halfway between the fixing screws (30, 31) and (32, 33).

7. Agricultural implement according to Claim 1, characterized by the fact that a sliding adjustment is foreseen between the ends (23 and 24) of the transmission shafts (21 and 22) and the drive pinion (25).

8. Agricultural implement according to any one of the preceding claims, characterized by the fact that it is equipped, in a well-known manner, with a bearing (39) having a ball bearing (40) to guide the end (23 or 24) of the transmission shaft (21 or 22) and that between the ends (23 and 24) of the transmission shafts (21 and 22) and the ball bearing (40) a sliding adjustement is foreseen.

FIG . 1

FIG. 2

FIG. 3